# EUROPEAN PATENT SPECIFICATION

(11) **EP 2 283 178 B1**
(45) Date of publication and mention of the grant of the patent: **08.08.2018**
(21) Application number: 09738040.6
(22) Date of filing: 22.04.2009
(51) Int. Cl.: D06F 33/02, D06F 37/30

(54) **A WASHING MACHINE**
WASCHMASCHINE
MACHINE À LAVER

(30) Priority: 02.05.2008 TR 200803075
(43) Date of publication of application: 16.02.2011
(73) Proprietor: Arçelik Anonim Sirketi, 34950 Istanbul (TR)
(72) Inventor: ERENAY, Kerem, 34950 Istanbul (TR); SONMEZOZ, Fehmi, 34950 Istanbul (TR); TEZDUYAR, Latif, 34950 Istanbul (TR); OZCAN, Ersoy, 34950 Istanbul (TR)
(86) International application number: PCT/EP2009/054769
(87) International publication number: WO 2009/132996

(56) References cited:
- EP-A- 0 936 729
- WO-A-00/05806
- JP-A- 2001 070 686
- JP-A- 2003 311 073
- US-A- 5 092 140
- US-B1- 6 356 044

## Description

The present invention relates to a washing machine wherein the main card and the motor card communicate serially.

Washing machines can be operated with a universal motor (UMAC-UMDC) or a brushless motor (Brushless DC). Universal motors can be driven by the main card of the washing machine since their electronic controls are simple.

A separate electronic card is required to be used for the electrical controls of brushless motors. Data about the physical characteristics and operating principles of the motor such as the highest cycle speed, current bound, power, belt-pulley ratio are loaded in the motor card of the brushless motor. Along with the data about the washing machine like the display unit, data pertaining to the operation of the motor such as belt-pulley ratio and washing programs are loaded in the main card. Main card drives the motor by commanding the motor card.

Producing separate motor cards for each model employing different motors results in additional costs, though employing brushless motors increases the performance for the firms producing washing machines.

In the state of the art Japanese Patent Application No JP2001070686, the power consumption generated by the usage of a control card and a motor card in a washing machine, brush of which is driven by the motor, is mentioned.

Another embodiment known in the state of the art is explained in the European Patent Application No EP0684692. In this embodiment, compatible driving the motor to different model washing machines is provided by changing the position of the switches on the motor card.

Japanese Patent Application No JP2003311073 discloses a washing machine comprising a brushless direct current motor.

International Patent Application No WO0005806 relates to system and method for electric machines. United States Application No US5092140 discloses a washing machine with a brushless motor with a control device determining the voltage applied to the motor based on a data table. European Patent Application No EP0936729 discloses a rotary machine integral with a control device, which is effective to reduce the cost of manufacture of a variable-speed pump or the like, and allows control programs to be easily established at the installation site.

In these state of the art embodiments, the control cards and motor cards used in different model washing machines are also required to be changed during production. Along with the compatibility and communication problems caused by the production of these cards different for each model, financial losses occur since time and old motor cards are wasted.

The aim of the present invention is the realization of a washing machine wherein production cost is reduced.

The washing machine realized in order to attain the aim of the present invention, explicated in the first claim and the respective claims thereof, comprises a Brushless DC motor, a main card enabling the control of the functions and components and a motor card enabling the operation of the motor in accordance with the commands (program duration, unbalanced load ratio, operation duration etc.) provided by the main card.

Characteristic features (current bound, power, belt-pulley ratio, torque data, the highest rotation speed etc.) related to the motor are loaded in the main card during the production phase of the washing machine. No information regarding the characteristic features of the motor is loaded in the motor card and the motor card drives the motor in accordance with the data about the characteristic features of the motor and to the operation commands provided by the main card.

The washing machine realized in order to attain the aim of the present invention is illustrated in the attached figures, where:

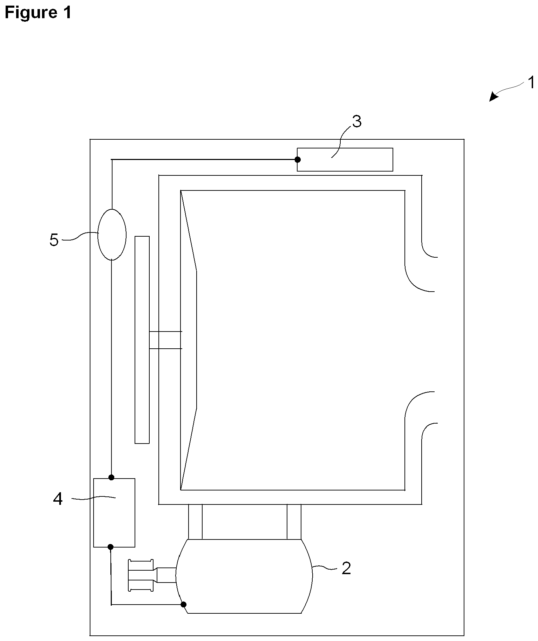

Figure 1 - is the schematic view of a washing machine.
Figure 2 - is the flowsheet of the parameter-loading algorithm used in an embodiment of the present invention.
Figure 3 - is the flowsheet of the data exchange algorithm between the main card and the motor card.
Figure 4 - is the flowsheet of the diagnostic algorithm during the data exchange.

The elements illustrated in the figures are numbered as follows:
1. Washing Machine
2. Motor
3. Main Card
4. Motor Card
5. Communication Unit

The washing machine (1) of the present invention comprises
- a Brushless DC motor (2),
- a main card (3) providing the control of the functions and components of the washing machine (1),
- a motor card (4) enabling the motor (2) to operate according to the commands (program duration, unbalanced load ratio, run duration etc.) provided by the main card (3).

Characteristic features (current bound, power, belt-pulley ratio, torque data, the highest rotation speed etc.) related to the motor (2) are loaded in the main card (3) during the production phase of the washing machine (1). No information regarding the characteristic features of the motor (2) is loaded in the motor card (4), the motor card (4) drives the motor (2) according to the data about the characteristic features of the motor (2) and to the operation commands provided by the main card (3).

Command units that will detect the commands coming from the main card (3) and transmit them to the motor (2) are provided on the motor card (4).

The motor (2) has different rotation speeds which are high during the spinning process and low during the washing process. The motor (2) rotation speed is determined by the values of motor (2) constant (k), angular speed, motor (2) resistor and the drawn current. The rotation speed varying in different motors (2) is loaded in the main card (3), thus a single motor card (4) can be used in different models of washing machines (1).

The starting torque amount required for the motor (2) to start rotating can vary between 10Nm and 20Nm in different motors (2), having different values during washing and spinning periods. By loading the starting torque data for the motor (2) in the main card (3), a single motor card (4) is enabled to be used for motors (2) having different torques.

The clothes clung to the wall of the drum during the spinning process create unbalanced load. Said imbalance makes the rotational movement of the drum difficult. As the imbalance increases, the operation of the motor (2) gets degraded and therefore the motor draws more current. Since the data about the bound of the highest current that can be drawn during unbalanced load are loaded in the main card (3), a single motor card (4) is used for motors (2) having different current bound values.

By loading the characteristic features of the motor (2) such as rotation speed, torque data and bound of the highest current that can be drawn in the main card (3), a single motor card (4) is used for different motors (2) used in different models of the washing machine (1).

The washing machine (1) of the present invention comprises a communication unit (5) that exchanges data diagnostically between the main card (3) and the motor card (4).

The communication unit (5) provides each characteristic feature of the motor (2) to be sent from the main card (3) to the motor card (4).

The motor card (4) responds the commands provided by the main card (3) only after the sending of the characteristic features of the motor (2) is completed.

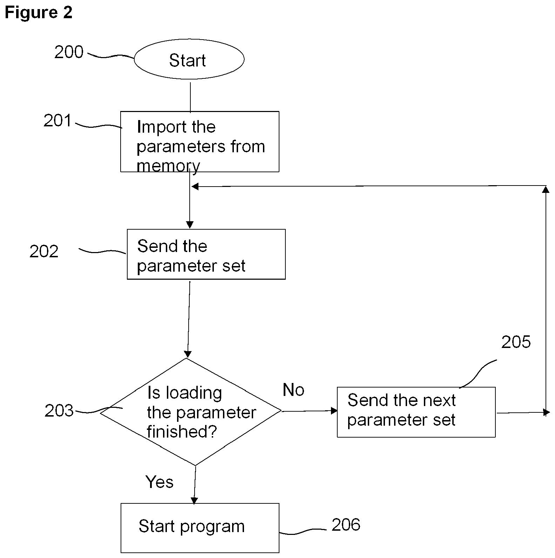

The parameter loading algorithm from the main card (3) to the motor card (4) comprises the following steps (Figure 2):
- starting the algorithm by starting the washing machine (1) (200)
- importing the characteristic features of the motor (2) from the main card (3) by calling the parameter set regarding the motor (2) from the memory (201)
- sending the parameter set from the main card (3) to the motor card (4) (202)
- querying whether all of the parameters are loaded to the motor card (4) or not (203)
- sending the next parameter if the parameter loading is not yet finished (205)
- starting the Normal operating program if the parameter loading is completed (206).

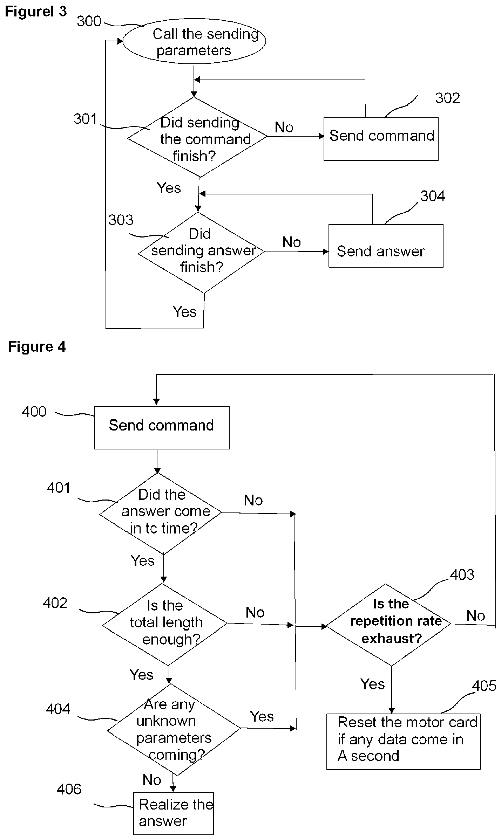

The data exchange method between the main card (3) and the motor card (4) comprises the following steps :
- calling the parameters and commands from the memory that will be sent from the main card (3) to the motor card (4) (300)
- querying all of the commands and parameters whether they are sent or not (301)
- sending the next command if the command sending is not yet finished (302)
- controlling the response receiving if the command sending is finished (303)
- proceeding with the sending the response if the response sending is not yet finished (304)
- returning to the first step in order to send the new command if the response sending is completed (300) (Figure 3).

The diagnostic method during the data exchange between the main card (3) and the motor card (4) comprises the following steps (Figure 4):
- checking errors that may occur during the data exchange (400)
- checking the required response time to the commands in case the given period of time (tc) is exceeded (401)
- proceeding with the next command (402) if tc is not exceeded, else proceeding with the step of checking the error repetition rate (403)
- controlling the command (300) sent from the main card (3) to the motor card (4) whether the command has the total byte length as required (402)
- proceeding with the next step (404) if the command has the total byte length as required, else proceeding with the step of checking the error repetition rate (403)
- checking if there are any commands other than the commands (300) expected to be sent from the main card (3) to the motor card (4) (404)
- proceeding with the next step (405) if there is not any other command, else proceeding with the step of checking the error repetition rate (403)
- resetting the motor card (4) if the predetermined error repetition count goes down to zero (405)
- realizing the command sent from the main card (3) to the motor card (4) (406).

If the number of resets of the motor card (4) exceeds the predetermined number, the user is warned and the washing machine (1) is shut down. By means of the communication unit (5) exchanging diagnostic data of the present invention, the motor (2) is prevented from malfunctioning and the user safety is provided.

The motor card (4) used in the washing machine (1) of the present invention is compatible for operating with the structure of the washing machine (1) in different models since no data parameter is previously loaded in the motor card (4). Thus the model of the washing machine (1) can be produced only by changing the main card (3) and without the requirement of any other compatibility testing.

## Claims

1. A washing machine (1) comprising a Brushless DC motor (2), a main card (3) providing the control of the functions and components of the washing machine (1) and a motor card (4) enabling the motor (2) to operate according to the commands provided by the main card (3), the washing machine (1) being defined by:
- the main card (3) wherein characteristic features of the motor (2) that comprise at least one of current bound, power, belt-pulley ratio, torque data, and the highest rotation speed are loaded while being produced, and **characterized by**:
- the motor card (4) wherein no information regarding the said characteristic features of the motor (2) is loaded while being produced and which drives the motor (2) according to the said characteristic features of the motor (2) which are sent from the main card (3) to the motor card (4) and according to operation commands sent from the main card (3) to the motor card (4).

2. A washing machine (1) as in Claim 1, **characterized by** the motor card (4) that responds the commands coming from the main card (3) only after the sending of the characteristic features of the motor (2) is finished.

3. A washing machine (1) as in any one of the above Claims, **characterized by** the main card (3) wherein the torque data required for the motor (2) to start among the characteristic features of the motor (2) are loaded.

4. A washing machine (1) as in any one of the above Claims, **characterized by** the main card (3) wherein the data about the bound of the highest current that the motor (2) can draw when unbalanced load occurs during spinning among the characteristic features of the motor (2) are loaded.

5. A washing machine (1) as in any one of the above Claims, **characterized by** a communication unit (5) that provides data exchange with diagnostics between the main card (3) and the motor card (4).

6. A washing machine (1) as in any one of the above Claims, **characterized by** the motor card (4) that is reset and starts reoperation when an error is found as a result of total length of commands control and of the sequential communication check.

## Patentansprüche

1. Waschmaschine (1) umfassend einen bürstenlosen Gleichstrommotor (2) eine Hauptkarte (3), die die Steuerung der Funktionen und Komponente der Waschmaschine (1) vorsieht eine Motorkarte (4), die es dem Motor (2) ermöglicht, gemäß den von der Hauptkarte (3) bereitgestellten Befehlen zu arbeiten, wobei die Waschmaschine (1) definiert ist durch:
- Hauptkarte (3), wobei die charakteristische Merkmale des Motors (2) umfassend, die wenigstens eines von Stromgrenze, Kraft, Riemenscheibenverhältnis, Drehmomentdaten und die höchste Drehzahl, während der Produktion geladen werden
**gekennzeichnet durch:**
- Motorkarte (4), wobei keine Information bezüglich der charakteristischen Merkmale des Motors (2) während der Herstellung geladen ist und die den Motor (2) gemäß der charakteristischen Merkmale des Motors (2) antreibt, die von der Hauptkarte (3) zur Motorkarte (4) gesendet sind und gemäß der Operationsbefehle, die von der Hauptkarte (3) zur Motorkarte (4) gesendet sind.

2. Waschmaschine (1) nach Anspruch 1, **gekennzeichnet durch** die Motorkarte (4), die auf der von der Hauptkarte (3) kommenden Befehle erst nach Beendigung des Sendens der charakteristischen Merkmale des Motors (2) reagiert.

3. Waschmaschine (1) nach einem der vorangehenden Ansprüche, **gekennzeichnet durch** die Hauptkarte (3), wobei die Drehmomentdaten, die für den Start des Motor (2) erforderlich sind, unter den charakteristischen Merkmalen des Motors (2) geladen sind.

4. Waschmaschine (1) nach einem der vorangehenden Anspürche, **gekennzeichnet durch** die Hauptkarte (3), wobei die Daten über die Grenze des höchsten Stroms, den der Motor (2) ziehen kann, wenn ungleichmäßige Ladung während des Drehens auftritt, unter den charakteristischen Merkmalen des Motors (2) geladen sind.

5. Waschmaschine (1) nach einem der vorangehenden Ansprüche, **gekennzeichnet durch** eine Kommunikationseinheit (5), die einen Datenaustausch mit der Diagnostik zwischen der Hauptkarte (3) und der Motorkarte (4) vorsieht.

6. Waschmaschine (1) nach einem der vorangehenden Ansprüche, **gekennzeichnet durch** eine Motorkarte (4), die zurückgesetzt ist und die Reoperation startet, wenn ein Fehler aufgrund der Gesamtlänge der Befehlssteuerung und der sequentiellen Kommunikationsprüfung festgestellt ist.

## Revendications

1. Machine à laver (1) comprenant un Moteur CC sans balai (2), une carte principale (3) assurant le contrôle des fonctions et composants de la machine à laver (1) et une carte moteur (4) permettant au moteur (2) fonctionner selon les commandes fournies par la carte principale (3), la machine à laver (1) étant définie par:
- la carte principale (3) dans laquelle les caractéristiques du moteur (2) qui comprennent au moins l'un de la limite de courant, de la puissance, du rapport courroie-poulie, des données de couple et de la vitesse de rotation la plus élevée sont chargées;
**caractérisé par**:
- la carte moteur (4) dans laquelle aucune information concernant lesdites caractéristiques du moteur (2) n'est chargée pendant la production et qui entraîne le moteur (2) en fonction des traits caractéristiques du moteur (2) qui sont émises de la carte principale (3) à la carte moteur (4) et en fonction des commandes de fonctionnement envoyées de la carte principale (3) à la carte moteur (4).

2. Machine à laver (1) selon la revendication 1, **caractérisée par** la carte moteur (4) qui répond aux commandes provenant de la carte principale (3) seulement après l'envoi des caractéristiques du moteur (2) est terminée.

3. Machine à laver (1) selon l'une quelconque des revendications précédentes, **caractérisée par** la carte principale (3) dans laquelle sont chargées les données de couple nécessaires au démarrage du moteur (2) parmi les caractéristiques du moteur (2).

4. Machine à laver (1) selon l'une quelconque des revendications précédentes, **caractérisée par** la carte principale (3) dans laquelle les données concernant la limite du courant le plus élevé que le moteur (2) peut tirer lorsqu'une charge déséquilibrée se produit pendant la rotation entre les caractéristiques les caractéristiques du moteur (2) sont chargées.

5. Machine à laver (1) selon l'une quelconque des revendications précédentes, **caractérisée par** une unité de communication (5) qui fournit un échange de données avec des diagnostics entre la carte principale (3) et la carte moteur (4).

6. Machine à laver (1) selon l'une quelconque des revendications précédentes, **caractérisée par** la carte moteur (4) est remise à zéro et redémarre lorsqu'une erreur est détectée en raison de la longueur totale du contrôle des commandes et du contrôle séquentiel des communications.
